# EUROPEAN PATENT SPECIFICATION

(11) **EP 3 666 521 B1**
(45) Date of publication and mention of the grant of the patent: **11.01.2023**
(21) Application number: 18425101.5
(22) Date of filing: 14.12.2018
(51) Int. Cl.: B32B 27/08, B32B 27/32, C08J 7/04, B65D 65/40, C08J 7/048, C08J 7/043

(54) **BOPP-BASED ARTICLE WITH WET BARRIER PROPERTIES**
BOPP-BASIERTER ARTIKEL MIT NASSBARRIEREEIGENSCHAFTEN
ARTICLE BASÉ SUR BOPP AVEC DES PROPRIÉTÉS DE BARRIÈRE HUMIDE

(43) Date of publication of application: 17.06.2020
(73) Proprietor: VIBAC S.p.A., 15040 Ticineto (Alessandria) (IT)
(72) Inventor: LEPORI, Alessandro, 50053 Empoli (Firenze) (IT); MAGNO, Carmela, 67010 Bazzano (L'Aquila) (IT); PARISSE, Luigi, 67100 L'Aquila (IT); MAZZAFERRO, Stefano, 67100 L'Aquila (IT)
(74) Representative: Gerbino, Angelo

(56) References cited:
- EP-A1- 2 881 250
- EP-A1- 3 369 767
- WO-A1-96/01736
- WO-A1-2009/134538
- WO-A2-2012/131362
- JP-A- H07 256 811
- US-A1- 2012 088 108
- US-A1- 2013 004 764

## Description

The present invention relates to materials used for making food packaging.

The packaging materials intended for use in contact with food must not transfer to the latter any component that may alter the composition thereof, cause a deterioration in the organoleptic properties or compromise the health of the consumer.

In particular, it is critical to protect foods from the contamination of mineral oils (generally, but not exclusively, present in recycled cartons), as well as from the harmful effects of oxygen and water vapor on the taste and consistency thereof.

In order to meet the aforesaid requirements, biaxially oriented polypropylene (BOPP) films lacquered with PVdC-based barrier layers have been made, thus creating a composite packaging.

Nevertheless, the fact that such a package is not adequately recyclable has led the persons skilled in the art to investigate other techniques for making a package with barrier properties.

US 5 667 902 A describes a BOPP film, wherein the combined effect of high isotactic-grade polypropylene and hydrocarbon resin results in increased water vapor barrier properties.

WO 2003/066324 A1 describes a BOPP film, wherein the presence of hydrocarbon resin and high crystallinity polypropylene gives the film oil barrier properties.

WO 1996/027624 A1 emphasizes the oxygen barrier effect of a polyvinyl alcohol (PVOH)-based layer.

WO 2013/160199 A1 describes the effectiveness of PVOH as a barrier to mineral oils.

EP 3 369 767 A1 describes a BOPP film coated with an acrylic- and amino acid-based lacquer layer, which has remarkable mineral oil barrier properties.

WO 96/01736 A1 discloses a polymeric film structure including a polymeric substrate adapted to receive an oxygen barrier on one side thereof and a moisture barrier on the other side of the oxygen barrier. The oxygen barrier includes polyvinyl alcohol cross-linked with aldehyde containing cross-linking agents in the presence of a catalytic amount of inorganic acid, e.g., sulfuric acid. The moisture barrier is cellulosic material, metallized polymeric composite, or a coating of polyvinylidene chloride.

US 2013/004764 A1 discloses a modified polyvinyl alcohol (PVA) coated film used for printing, which film comprises a coating layer, a primer layer and a substrate in turn. The coating layer comprises acrylic coating layer and modified PVA coating layer in turn. The modified PVA coating layer contacts with the primer layer and has the properties of higher barrier and moisture-proof and is suitable for printing.

EP 2 881 250 A1 discloses a BOPP film with a coating layer which has an O₂TR value in cm³/m²/day in a range from 100 to 2000, and a MOSH value of 0.6 mg/kg or less. This coating layer may comprise a poly-vinyl amine and a styrene butadiene resin emulsion.

WO2009/134 538 A1 discloses a multilayer product comprising a layer of a water-based coating composition comprising a polymeric binder and an amine stabilizer, wherein the pH of the coating composition is equal to or greater than the pKa of the amine stabilizer.

However, the aforesaid PVOH-based layers or those based on other materials such as acrylic resin and amino acids have proved incapable of maintaining their otherwise good barrier properties against mineral oils and oxygen under high humidity conditions.

An object of the present invention is thus to remedy the aforesaid drawbacks of the prior art. According to the invention, such object is achieved by a layered article having the features disclosed in independent claim 1 which follows. Preferred features of such an article are disclosed in the dependent claims.

In the present description, a BOPP-based film is defined as a film consisting of at least 85% by weight biaxially oriented homopolymer or copolymer PP.

The outer layer of the layered article of the invention protects the barrier layer from loss of its properties with regards to oxygen and mineral oils, even in conditions of high relative humidity.

According to one embodiment, the article of the invention consists (see accompanying figure) of a BOPP-based film 10, an intermediate layer 12 acting as an oil and gas barrier and an outer layer 14 protecting the barrier layer from moisture. As shown in the aforesaid figure, the film 10 comprises an inner layer 10a (core) and two outer layers 10b (skin).

Further details are now provided on the individual layers of the layered article of the invention.

### BOPP-based films

The BOPP-based film may be composed of one or more layers. The outer layers may be composed of homopolymer PP, copolymers C₃-C₄ and C₃-C₂-C₄ or mixtures thereof. The inner layer is made up of homopolymer PP with a high degree of isotacticity (solubility in xylene > 98%, melting temperature (Tₘ) > 163°C) and hydrogenated hydrocarbon resin (softening point temperature > 135°C) in quantities by weight variable in the range of 5% - 15%. Additives such as white pigments (TiO₂), cavitants (CaCO₃), antiblocking agents (Synthetic Silica, PMMA), and slip agents (erucamide, polydimethylsiloxane) may be present.

Non-limiting examples of commercial products that may be used are the following.

Homopolymer PP with a high degree of isotacticity: Adstif HA 3105 - LyondellBasell; HC110BF - Borealis.

Hydrocarbon resin: Oppera PR 100N - Exxon Mobil Chemical; Plastolyn R1140 - Eastman.

Preferably, the overall thickness of the BOPP-based film is 15 to 60 µm, while the outer layers are each approximately 1 µm thick.

The film may be produced in a manner known per se through sequential stretching ("stenter") systems or simultaneous stretching (double-bubble and LISIM^{®} - Brueckner Maschinenbau GmbH & Co KG).

### Oxygen and mineral oil barrier layer

The barrier layer is preferably applied onto a primer layer previously applied to a side of the BOPP-based film pre-treated by flame or corona in order to obtain a critical surface energy of at least 38 mN/m.

The primer, for example, is an aqueous dispersion based on polyethylenimine (PEI) or aliphatic polyurethane and is applied with a reverse gravure system in a dry quantity variable from 0.03 g/m² to 0.25 g/m².

The barrier layer consists of a polymeric binder, such as a copolymer based on esters of acrylic and meta-acrylic acid and/or styrene (Tg 50-70°C; MFFT 25-60°C), of an amino acid, carnauba wax and synthetic and/or colloidal silica as antiblock. The barrier layer is applicable in the form of an aqueous dispersion with reverse gravure system in dry quantities variable from 0.30 g/m² to 7 g/m².

An example of formulation ranges expressed in parts by weight is given in Table I below.

**Table I**

| | phr^{∗} |
|---|---|
| Polymeric binder | 100 |
| Amino acid | 5-80 |
| Carnauba wax | 3-10 |
| Synthetic silica | 0.1-0.5 |
| Colloidal silica | 0-40 |

| | |
|---|---|
| phr^{∗}: dry parts per 100 parts of resin | |

Non-limiting examples of commercial products that may be used are the following.
Polymeric binder: NeoCryl FL-711 (DSM), NeoCryl BT-36 (DSM), NeoCryl FL-791 XP (DSM), NeoCryl BT-67 (DSM), Joncryl HSL 700 (BASF), Loctite Liofol HS 4118 (Henkel).
Amino acids: L-Arginine (Kyowa Hakko), L-Lisine, L-Lisine HCl (Kyowa Hakko), Glicine (Sigma-Aldrich), L-Citrulline (Kyowa Hakko).

### Protective layer

The outer protective layer comprises nitrocellulose, polyurethane and slip agent, with nitrocellulose preferably containing 10.7 to 12.2 by weight of nitrogen and slip agent chosen from the group consisting of erucamide acid, polydimethylsiloxane, polyethylene and mixtures thereof.

Nitrocellulose is used because it is easy to dry, economical, easy to "film-form", heat-resistant, has a low odor and a good degree of dimensional stability. The rigidity of nitrocellulose may be corrected with plasticizers such as citrates, adipates, phthalates and stearic acid esters.

Polyurethane resin provides flexibility, elasticity and excellent adhesion to the underlying layer.

The slip agent allows one to obtain a surface with the desired friction coefficient, an absence of "blocking", and scratch resistance.

If additional properties are needed, such as:
- increased adhesion to the substrate,
- increased cohesion through cross-linking,
- increased resistance to chemicals, solvents and moisture, and
- increased temperature resistance,
organic titanate/zirconate and/or diisocyanate (XDI, H6XDI) may also be added.

An example of formulation ranges expressed in parts by weight (pbw) is given in Table II below.

**Table II**

| | pbw |
|---|---|
| Nitrocellulose | 30-50 |
| Polyurethane | 30-50 |
| Diisocyanate | 0-10 |
| Organic titanate/zirconate | 0-10 |
| Slip agent | 1-5 |

Non-limiting examples of commercial products that may be used are the following.
Nitrocellulose: LX 3/5, MX 3/5, HX 3/5 - Nitrex Chemicals India; A 400, E 510, AM 500 - Dow Wolff Cellulosics GmbH.
Polyurethane: Versamid PUR 1120, Versamid PUR 7132 BASF.
Diisocyanate: Takenate 500, Takenate 600, Takenate D-110N, Takenate D-120N - Mitsui Chemicals.
Organic titanate/zirconate: Tyzor AA, AA-65, AA-75, AA-105, IAM - Darf Ketal Chemicals India Pvt Ltd.
Slip agent: MPP-620F, MPP-620VF, MPP-620XF, MPP-620XXF - Micro Powders Inc.; Ceretan A 71, MA 7150 - Münzing Chemie GmbH; Luba Print 301/C, 654/D, 2036 A, 3036 A, 754 - Münzing Chemie GmbH.

Other substances usable individually or in a mixture for the protective layer are: polyvinyl butyral (PVB), polyamide resins, ketone resins and a slip agent.

Non-limiting examples of commercial products that may be used are the following.
PVB: Mowital B 14 S, B 45 H, B 75 H - Kuraray.
Polyamide resins: Versamid 725, 728, 744 - BASF; Flexrez 4584 AD, 1074 CS - Lawter.
Ketone resins: Reactol 1717 HC - Lawter.

The protective layer is applicable in quantities of 0.3 to 3 g/m² by various techniques (e.g. rotogravure, flexography, reverse gravure) in solution in a solvent (usually, but not exclusively, ethyl acetate, ethyl alcohol or a mixture thereof). The dry residue may vary from 20 to 60% by weight.

### EXAMPLES

Further advantages and features of the present invention will become apparent from the following examples of embodiment provided by way of non-limiting examples.

Four samples of a layered article were prepared, two for comparison (A and B) and two according to the invention (C and D).

Initially, a BOPP-based film common to the four samples was produced by a sequential stretching system (longitudinal stretching ratio MDx 5, transverse stretching ratio TDx 9). The BOPP-based film is composed of a plurality of layers, in particular two outer layers of Adsyl 5C39F, 1 µm thick, and one inner layer (core) of Adstif HA 3105 (94%) and Oppera PR100N (6%), 23 µm thick. Adsyl 5C39F is a C₂-C₃-C₄ terpolymer, manufactured by LyondellBasell.

### Preparation sample A Reference

One face of the aforesaid BOPP-based film was corona-treated to achieve a critical surface energy > 38 mN/m. Subsequently, a layer of primer (Michem Flex P 2300 (Michelman): 0.05 g/m² dry) and then a PVOH-based barrier layer (0.5 g/m²) were applied to the treated face.

### Preparation sample B

One face of the aforesaid BOPP-based film was corona-treated to achieve a critical surface energy > 38 mN/m. Subsequently, a layer of primer (Michem Flex P 2300 (Michelman): 0.05 g/m² dry) and then an acrylic-based barrier layer (1 g/m²) were applied to the treated face, formulated as shown in Table III below.

**Table III**

| **Product** | **Type** | **Manufacturer** | **phr^{∗}** |
|---|---|---|---|
| Joncryl HSL 700 | Acrylic resin | BASF | 100 |
| Bindzil 40/170 | Colloidal silica | Akzo Nobel | 25 |
| Michem Lube 160PFP | Carnauba wax | Michelman | 7.2 |
| Syloid 244FP | Synthetic silica | Grace | 0.1 |
| L-Arginine | Amino acid | Kyowa Hakko | 40 |

| | | | |
|---|---|---|---|
| phr^{∗}: dry parts per 100 parts of resin | | | |

### Preparation sample C Reference

A protective layer (1 g/m²) formulated as shown in Table IV below was applied to the layered article of sample A using a flexographic technique.

**Table IV**

| **Product** | **Manufacturer** | **pbw** |
|---|---|---|
| LX 3/5 | Nitrex Chemicals | 48 |
| Versamid PUR 1120 | BASF | 48 |
| Tyzor AA | Darf Ketal Chemicals | 2 |
| MPP 620F | Micro Powders Inc. | 2 |

### Preparation sample D

The same protective layer used for the preparation of sample C was applied to the layered article of sample B.

### Experimental tests

The four samples A-D were subjected to measurements of transmission rates of substances, representative of the family of mineral oils, and measurements of oxygen transmission rates, after being kept in an oven at 50°C at a relative humidity of 100% (environment saturated with water vapor) for various periods of time.

### Transmission of mineral oils

The sample is placed in a special permeation cell. A cardboard disk contaminated with mineral oil is positioned in the lower part of the cell (about 750 µg/g (ppm) for each substance). The sample is in direct contact with the cardboard. Nitrogen is made to flow on the other side of the cell. The nitrogen flow removes the substances permeated through the sample. The nitrogen is then analyzed using the gas chromatography technique with a flame ionization detector (GC/FID). Calibration is achieved by injecting known quantities of the substances to be measured. Samples are measured at 40°C for 40 days, twice a day.

Table VI below shows the list of the permeating substances that have been tested.

**Table VI**

| | | | **Molecular weight** | **Melting temperature** | **Boiling point** | **Density** |
|---|---|---|---|---|---|---|
| **Substance** | **CAS** | **Formula** | **g/mol** | **°C** | **°C** | **g/ml** |
| C 12 | 112-40-3 | C12H26 | 170.33 | -10 | 216 | 0.7487 |
| Naphthalene | 91-20-3 | C₁₀H₈ | 128.17 | 80 | 218 | 1.1400 |

Table VII below shows the maximum permeation rate of the permeating substances tested using samples A-D.

**Table VII**

| **Substance** | **CAS** | **Formula** | **A (µg/24h dm²)** | **B (µg/24h dm²)** | **C (µg/24H dm²)** | **D (µg/24h dm²)** |
|---|---|---|---|---|---|---|
| C 12 | 112-40-3 | C12H26 | 5.0 | 4.0 | 5.4 | 4.4 |
| Naphthalene | 91-20-3 | CioHs | 1.5 | 1.6 | 2.1 | 2.1 |

Table VIII below shows the amount of C12 permeated through samples A-D after predetermined and increasing times up to 240 hours in an oven at 50°C with a relative humidity of 100%.

**Table VIII**

| **Oven time (h)** | **A** | **B** | **C** | **D** |
|---|---|---|---|---|
| 0 | 5.0 | 4.0 | 5.4 | 4.4 |
| 24 | 134 | 345 | 5.4 | 5.5 |
| 48 | 1450 | 1656 | 5.3 | 5.4 |
| 96 | 2400 | 2565 | 5.5 | 5.5 |
| 240 | 3200 | 2980 | 6.2 | 7.8 |

Table IX below shows the amount of naphthalene permeated through samples A-D after predetermined and increasing times up to 240 hours in an oven at 50°C with a relative humidity of 100%.

**Table IX**

| **Oven time (h)** | **A** | **B** | **C** | **D** |
|---|---|---|---|---|
| 0 | 1.5 | 1.6 | 2.1 | 2.1 |
| 24 | 450 | 350 | 2.1 | 2.3 |
| 48 | 650 | 532 | 2.2 | 2.4 |
| 96 | 1500 | 1453 | 3.2 | 2.5 |
| 240 | 1900 | 2100 | 3.1 | 2.4 |

### Oxygen Transmission (OTR)

An OX-TRAN (MOCON) instrument is used which allows one to measure the oxygen transmission rate according to the ASTM F 3985 method.

Dry nitrogen is introduced into a chamber where the sample - which has previously been kept in an oven for a predetermined time - acts as a membrane, separating this gas from the oxygen present on the opposite side. The difference in partial pressure creates a force that causes the oxygen to pass through the sample towards the low-pressure part. The test is completed when equilibrium is reached, i.e. when the sensor indicates that the oxygen molecules leave the chamber where the nitrogen is located at a constant rate.

The results obtained on samples A-D previously kept in an oven at 50°C and with a relative humidity of 100% for predetermined and increasing times, and expressed in cm³ (O₂)/m²/24h a 23 °C and 0% u.r. are reported in Table X below.

**Table X**

| **OTR (cm³/m²/24h)** | | | | |
|---|---|---|---|---|
| | **A** | **B** | **C** | **D** |
| 0 | 2 | 3 | 3 | 2 |
| 24 | 400 | 350 | 4 | 3 |
| 48 | 550 | 560 | 3 | 4 |
| 96 | 650 | 666 | 3 | 3 |
| 240 | 778 | 810 | 10 | 12 |
| ↑ | | | | |
| (Oven time (h)) | | | | |

A comparison of the data in Tables VIII, IX and X immediately shows how the samples C (Reference) and D (invention) are far superior to samples A and B (comparison) with regard to barrier properties after being kept in an oven at 50°C at a relative humidity of 100% for increasing periods of time up to 240 hours.

Naturally, without altering the principle of the invention, the details of implementation and embodiments may vary widely with respect to those described purely by way of example, without thereby departing from the scope of the invention as defined in the accompanying claims.

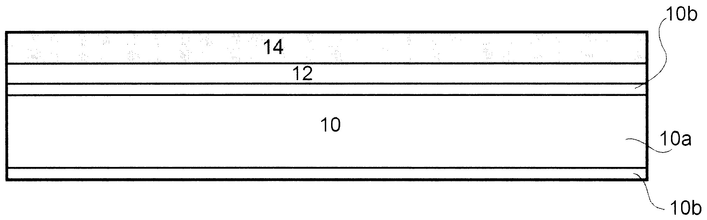

## Claims

1. Layered article comprising a BOPP-based film, at least one intermediate layer acting as an oil and gas, in particular oxygen, barrier and including a polymeric binder and at least one amino acid, and an outer layer protecting said intermediate layer against moisture and comprising at least nitrocellulose, polyurethane and slip agent, or polyvinyl butyral, polyamide resin, ketone resin or a mixture thereof, and slip agent.

2. Article according to claim 1, wherein said nitrocellulose contains from 10.7% to 12.2% nitrogen by weight.

3. Article according to any one of the preceding claims, wherein said slip agent is selected from the group consisting of erucamide acid, polydimethylsiloxane, polyethylene and mixtures thereof.

4. Article according to claim any one of the preceding claims, wherein said outer layer further comprises diisocyanates (XDI, H6XDI) and/or organic titanate/zirconate.

5. Article according to any one of the preceding claims, wherein said outer layer is formed of 30 to 50 parts by weight of nitrocellulose, 30 to 50 parts by weight of polyurethane, 1 to 5 parts by weight of slip agent, 0 to 10 parts by weight of diisocyanates, such as XDI and/or H6XDI, and 0 to 10 parts by weight of an organic titanium or zirconium salt.

6. Article according to any one of the preceding claims, wherein said film consists of one or more inner layers consisting mainly of homopolymer PP and one or more outer layers consisting of homopolymer PP, copolymers C3-C4, C3-C2-C4 and/or mixtures thereof.

7. Article according to any one of the preceding claims, wherein for 100 parts by weight of polymeric binder of said barrier layer there are 5 to 80 parts by weight of amino acid, 3 to 10 parts by weight of carnauba wax and from 0.1 to 40.5 parts by weight of silica.

8. Article according to claim 7, wherein said polymeric binder consists of esters of acrylic acid, meta-acrylic acid and/or styrene.

9. Article according to any one of the preceding claims, wherein said barrier layer is applied on a layer of primer that covers a face of the BOPP-based film.

10. Article according to claim 9, wherein said primer layer is formed of polyethyleneimine or aliphatic polyurethane.

## Patentansprüche

1. Mehrschichtiger Gegenstand, umfassend eine Folie auf BOPP-Basis, mindestens eine als Barriere für Öl und Gas, insbesondere Sauerstoff, dienende und ein polymeres Bindemittel und mindestens eine Aminosäure umfassende Zwischenschicht und eine die Zwischenschicht gegen Feuchtigkeit schützende und mindestens Nitrocellulose, Polyurethan und Gleitlack oder Polyvinylbutyral, Polyamidharz, Ketonharz oder eine Mischung davon enthaltende äußere Schicht, und Gleitlack.

2. Gegenstand nach Anspruch 1, wobei die Nitrocellulose 10,7 bis 12,2 Gewichtsprozent Stickstoff enthält.

3. Gegenstand nach einem der vorangehenden Ansprüche, wobei der Gleitlack aus der Gruppe bestehend aus Erucamidsäure, Polydimethylsiloxan, Polyethylen und Mischungen daraus ausgewählt ist.

4. Gegenstand nach einem der vorangehenden Ansprüche, wobei die äußere Schicht Diisocyanate (XDI, H6XDI) und/oder organisches Titanat/Zirkonat enthält.

5. Gegenstand nach einem der vorangehenden Ansprüche, wobei die äußere Schicht aus 30 bis 50 Gewichtsteilen Nitrocellulose, 30 bis 50 Gewichtsteilen Polyurethan, 1 bis 5 Gewichtsteilen Gleitlack, 0 bis 10 Gewichtsteilen Diisocyanaten wie XDI und/oder H6XDI und 0 bis 10 Gewichtsteilen eines organischen Titan- oder Zirkoniumsalzes gebildet ist.

6. Gegenstand nach einem der vorangehenden Ansprüche, wobei die Folie aus einer oder mehreren inneren Schichten hauptsächlich bestehend aus homopolymerem PP und einer oder mehreren äußeren Schichten bestehend aus homopolymerem PP, Copolymeren C3-C4, C3-C2, C4 und/oder Mischungen daraus besteht.

7. Gegenstand nach einem der vorangehenden Ansprüche, wobei es für 100 Gewichtsteile Polymerbinder der Barriereschicht 5 bis 80 Gewichtsteile Aminosäure, 3 bis 10 Gewichtsteile Carnaubawachs und von 0,1 bis 40,5 Gewichtsteile Silika gibt.

8. Gegenstand nach Anspruch 7, wobei der Polymerbinder aus Estern der Acrylsäure, Meta-Acrylsäure und/oder Styrol besteht.

9. Gegenstand nach einem der vorangehenden Ansprüche, wobei die Barriereschicht auf eine Primerschicht aufgetragen wird, die eine Oberfläche der BOPP-basierten Folie abdeckt.

10. Gegenstand nach Anspruch 9, wobei die Primerschicht aus Polyethylenimin oder aliphatischem Polyurethan besteht.

## Revendications

1. Article stratifié comprenant un film à base de BOPP, au moins une couche intermédiaire servant de barrière aux huiles et aux gaz, en particulier l'oxygène, et renfermant un liant polymère et au moins un acide aminé, et une couche externe protégeant ladite couche intermédiaire contre l'humidité et comprenant au moins de la nitrocellulose, du polyuréthane et de l'agent glissant, ou bien du polyvinylbutyral, de la résine de polyamide, de la résine cétonique ou un de leurs mélanges, et de l'agent glissant.

2. Article selon la revendication 1, dans lequel ladite nitrocellulose contient de 10,7% à 12,2% en poids d'azote.

3. Article selon l'une quelconque des revendications précédentes, dans lequel ledit agent glissant est choisi dans le groupe constitué par l'acide érucamide, le polydiméthylsiloxane, le polyéthylène et leurs mélanges.

4. Article selon l'une quelconque des revendications précédentes, dans lequel ladite couche externe comprend en outre des diisocyanates (XDI, H6XDI) et/ou du titanate/zirconate organique.

5. Article selon l'une quelconque des revendications précédentes, dans lequel ladite couche externe est formée de 30 à 50 parties en poids de nitrocellulose, 30 à 50 parties en poids de polyuréthane, 1 à 5 parties en poids d'agent glissant, 0 à 10 parties en poids de diisocyanates, tels que XDI et/ou H6XDI, et 0 à 10 parties en poids d'un sel de titane ou de zirconium organique.

6. Article selon l'une quelconque des revendications précédentes, dans lequel ledit film est constitué d'une ou de plusieurs couches internes constituées principalement d'homopolymère PP, et d'une ou de plusieurs couches externes constituées d'homopolymère PP, de copolymères C3-C4, C3-C2-C4 et/ou de leurs mélanges.

7. Article selon l'une quelconque des revendications précédentes, dans lequel, pour 100 parties en poids de liant polymère de ladite couche barrière, il y a 5 à 80 parties en poids d'acide aminé, 3 à 10 parties en poids de cire de carnauba et 0,1 à 40,5 parties en poids de silice.

8. Article selon la revendication 7, dans lequel ledit liant polymère est constitué d'esters d'acide acrylique, d'acide méta-acrylique et/ou de styrène.

9. Article selon l'une quelconque des revendications précédentes, dans lequel ladite couche barrière est appliquée sur une couche d'apprêt qui recouvre une face du film à base de BOPP.

10. Article selon la revendication 9, dans lequel ladite couche d'apprêt est formée de polyéthylèneimine ou de polyuréthane aliphatique.
